# EUROPEAN PATENT APPLICATION

(11) **EP 4 851 050 A1**
(43) Date of publication of application: **09.12.2026**
(21) Application number: 26174014.6
(22) Date of filing: 22.04.2026
(51) Int. Cl.: B64D 33/08, F02K 3/105, F02K 3/115, B64D 33/02

(54) **PROPULSION SYSTEM FOR AN AIRCRAFT COMPRISING A HEAT EXCHANGER ARRANGED UNDER AN INNER FIXED STRUCTURE**

(30) Priority: 15.05.2025 US 202563806391 P
(71) Applicant: Airbus Operations (S.A.S.), 31060 Toulouse Cedex 9 (FR)
(72) Inventor: SIBILLE, Benoit, 31000 TOULOUSE (FR); URIZ JAUREGUI, Fermin, 31000 TOULOUSE (FR); PUECH, Jacky, 31000 TOULOUSE (FR); THAUVIN, Jérôme, 31000 TOULOUSE (FR); DESCHAMPS, Matthieu, 31000 TOULOUSE (FR); PASNON, Quentin, 31000 TOULOUSE (FR); RAUHOFF, Sébastien, 31000 TOULOUSE (FR); DEFORET, Thomas, 31000 TOULOUSE (FR); STEVENS, Thomas, 31000 TOULOUSE (FR)
(74) Representative: Cabinet Le Guen Maillet

(57) **Abstract**

The invention concerns a propulsion system (100) of an aircraft, comprising a core (102) comprising a central fairing (102a), an inner casing (104) around the central fairing (102a), a fan casing (106) around the inner casing (104) where a secondary channel (107) for a secondary flow (107a) is delimited between the fan casing (106) and the inner casing (104), and- a heat exchanger (110) having a first inlet (110a) and a first outlet (110b) where the first inlet (110a) is an inlet opening (112) arranged on the inner casing (104) and where the first outlet (110b) is an outlet opening (116) arranged on the inner casing (104).

With this arrangement, the heat exchanger provides the required cooling capacity associated with larger engines, and have little-to-no impact on the aerodynamics.

## Description

### TECHNICAL FIELD

The invention relates to a propulsion system of an aircraft comprising an inner fixed structure and a heat exchanger positioned in the inner fixed structure. The invention relates to an aircraft comprising such propulsion system.

### PRIOR ART

An aircraft conventionally has a plurality of propulsion systems. Each propulsion system is generally secured underneath a wing of the aircraft and includes an engine and attachment means for securing the engine under the wing. As is known, the aircraft also has two wings, one on each side of a fuselage, with pylons for each engine. Surrounding the engines are nacelles and around the pylons are fairings. Recently, newer and larger engines are being proposed which have increased efficiency. Additionally, with these newer engines, new mounting systems including new pylons and/or fairing shapes, have been proposed. These new mounting systems have improved aerodynamics for the aircraft.

In view of these newer engines and new mounting systems, there is an ongoing need for new effective and efficient heat exchange systems which meet an increased cooling capacity needed with larger engines, and which do so without impacting the improved aerodynamics provided by the new mounting systems.

### SUMMARY OF THE INVENTION

An object of the present invention is to provide a propulsion system of an aircraft comprising an inner fixed structure and a heat exchanger arranged under the inner fixed structure.

To this end, is proposed a propulsion system of an aircraft, comprising:
- a core comprising a central fairing,
- an inner casing around the central fairing,
- a fan casing around the inner casing where a secondary channel for a secondary flow is delimited between the fan casing and the inner casing, and
- a heat exchanger having a first inlet and a first outlet where the first inlet is an inlet opening arranged on the inner casing and where the first outlet is an outlet opening arranged on the inner casing.

With this arrangement, the heat exchanger provides the required cooling capacity associated with larger engines, and have little-to-no impact on the aerodynamics.

Advantageously, the inlet opening is arranged upstream with respect to the outlet opening with regard of a flow direction of the secondary flow.

Advantageously, the propulsion system comprises thrust reverser block doors each being movable between an open position in which the door is out of the secondary channel and a closed position in which the door is across the secondary channel, and in that the inlet opening is arranged upstream with respect to the doors with regard of the flow direction of the secondary flow when the doors are in the closed position.

Advantageously, the heat exchanger comprises an inner fairing extending between the inlet opening and the outlet opening in the extension of the inner casing.

Advantageously, the heat exchanger is attached to the central fairing.

Advantageously, the heat exchanger comprises a heat exchanger chamber, a first channel fluidly connected between the heat exchanger chamber and the inlet opening and a second channel fluidly connected between the heat exchanger chamber and the outlet opening.

Advantageously, the connection between the channel and the associated opening is realized through a seal.

Advantageously, the inlet opening and the first channel have slight curves.

The invention concerns also an aircraft comprising a propulsion system according to any one of the preceding embodiments.

### BRIEF DESCRIPTION OF THE DRAWINGS

The features of the invention mentioned hereinabove, and others will become more clearly apparent on reading the following description of one embodiment, said description being given with reference to the appended drawings, in which:
Fig. 1 is a side view of an aircraft including a propulsion system according to the invention,
Fig. 2 is a schematic representation in section by a vertical median plane of a propulsion system of the invention,
Fig. 3 is a schematic front view taken along line III-III in Fig. 2 of the propulsion system according to the invention,
Fig. 4 is a schematic representation in section by a vertical median plane of the propulsion system of the invention, and
Fig. 5 is a perspective view of a heat exchanger used in the propulsion system of the invention.

### DETAILED DESCRIPTION OF EMBODIMENTS

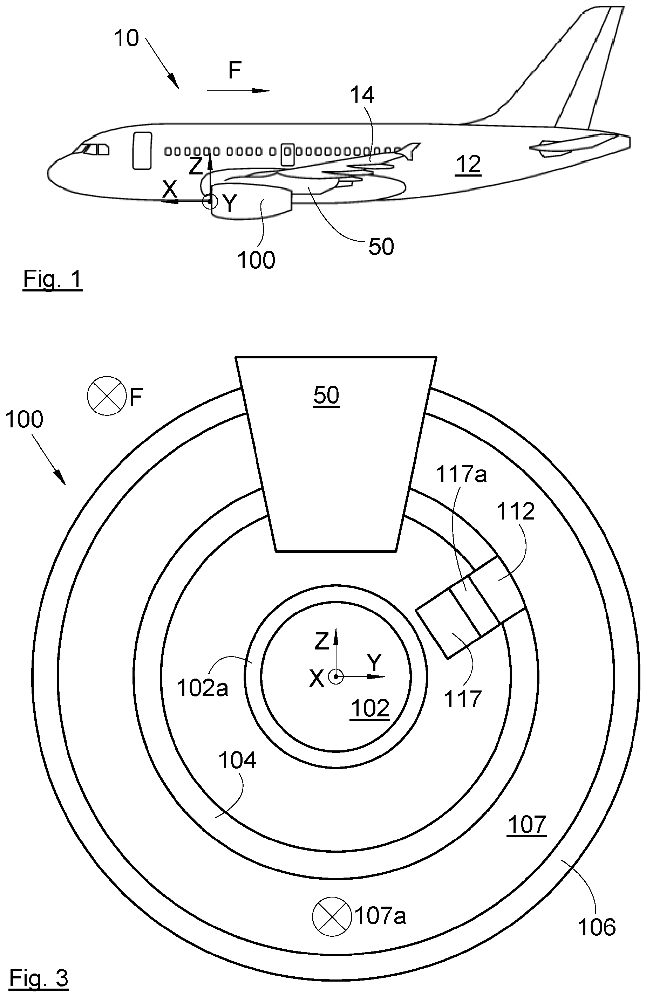

Fig. 1 shows an aircraft 10 which has a fuselage 12 on each side of which a wing 14 is attached. Under each wing 14 is fixed at least one propulsion system 100 according to the invention. Each propulsion system 100 is attached to the wing 14 thanks to a pylon 50.

The propulsion system 100 comprises an engine for example a turbojet engine comprising a fan. A fairing surrounds the pylon 50 and a nacelle surrounds the engine. The engine is for example a high ratio bypass engine.

In the following description, the terms relating to a position are taken in reference to an aircraft in the normal flight position, i.e. as shown in Fig. 1 and the "upstream" and "downstream" positions are taken in relation to the direction of air flow in the engine of the propulsion system 100 from the front to the rear of the propulsion system 100.

The arrow 'F' shows the direction of air flow, which is the opposite of the direction of travel of aircraft 10 when the engines are operating.

Throughout the following description, by convention, X refers to the longitudinal direction of the propulsion system 100 that is also considered to be the same as the longitudinal direction of the engine, this longitudinal direction X is parallel to a longitudinal axis of the aircraft 10. Furthermore, Y is the transverse direction to the propulsion system 100 and is horizontal when the aircraft 10 is on the ground, and Z is the vertical direction and is vertical when the aircraft 10 is on the ground, these three X, Y and Z directions being orthogonal to each other. Furthermore, the terms forward and aft or rear should be considered with respect to a direction of movement of the aircraft that occurs as a result of the thrust applied by the engine.

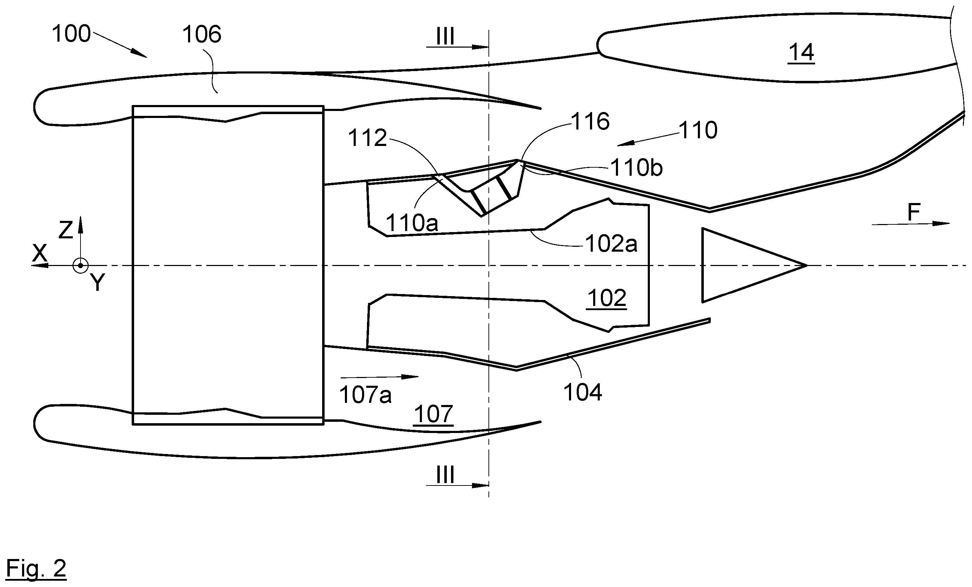

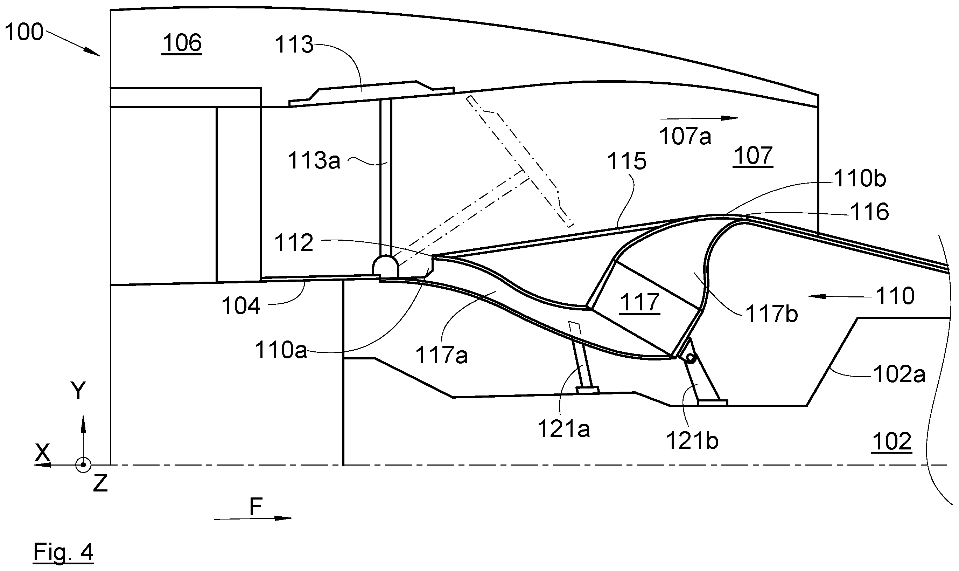

Fig. 2 to Fig. 4 show the propulsion system 100 according to the invention. The propulsion system 100 comprises a core 102 containing the compression stages, combustion chamber and turbine stages of the engine. These elements are enclosed in a central fairing 102a of the core 102. The central fairing 102a takes the form of a surface of revolution around the longitudinal axis X.

Around the central fairing 102a, the propulsion system 100 comprises an inner casing 104 coaxial with the central fairing 102a. The inner casing 104 is also called the inner fixed structure IFS.

Around the inner casing 104, the propulsion system 100 comprises a fan casing 106 extending forward of the inner casing 104 and surrounding a fan of the engine installed upstream. The fan casing 106 delimits an air inlet through which the air flow enters the propulsion system 100, due to the fan.

A secondary channel 107 is delimited between the fan casing 106 and the inner casing 104. This secondary channel 107 guides a secondary flow 107a which flows from upstream to downstream as shown by the arrows 107a.

A primary channel is in the core 102 and guides a primary flow in the central fairing 102a. The nacelle comprises at least the inner casing 104 and the fan casing 106.

The propulsion system 100 comprises a heat exchanger 110 which has a first inlet 110a and a first outlet 110b fluidly connected to the first inlet 110a through the heat exchanger 110. Thus, a fluid enters through the first inlet 110a exits through the first outlet 110b through the heat exchanger 110.

According to the invention, the first inlet 110a is an inlet opening 112 arranged on the inner casing 104 and the first outlet 110b is an outlet opening 116 arranged on the inner casing 104. With this arrangement, the heat exchanger 110 is installed inside the inner casing 104, it means outside of the secondary channel 107 and it therefore does not hinder the flow of air in the secondary channel 107.

The inlet opening 112 and the outlet opening 116 are fixed to the inner casing 104. The inlet opening 112 provides an air intake for secondary flow 107a.

A part of the air flowing in the secondary channel 107 enters in the heat exchanger 110 through the first inlet 110a and is reintroduced in the secondary channel 107 when it goes out through the first outlet 110b.

With this arrangement, the heat exchanger 110 provides the required cooling capacity, and has little-to-no impact on the aerodynamics in the secondary channel 107.

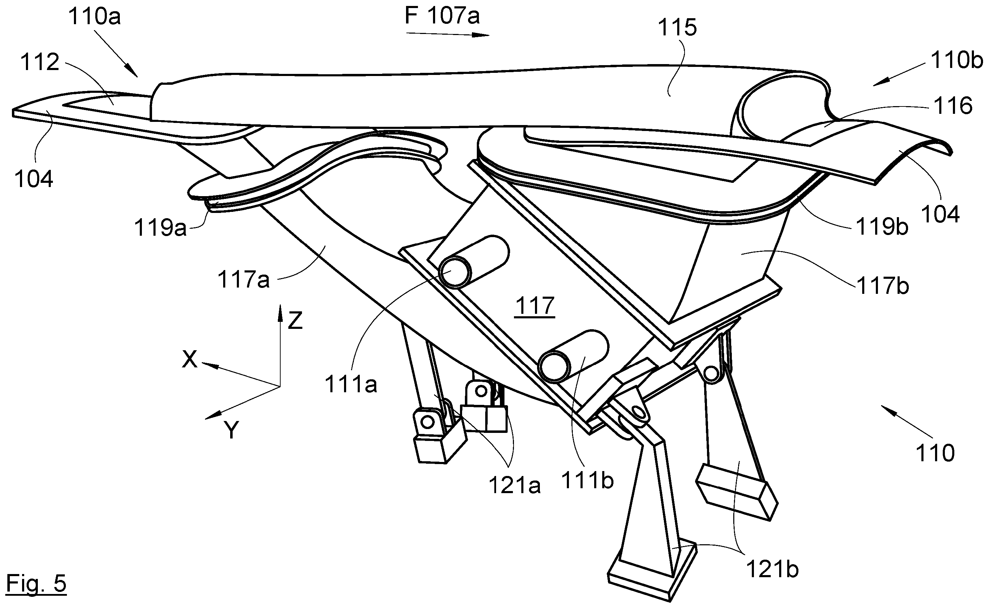

Fig. 5 shows the heat exchanger 110 which comprises also a second inlet 111a and a second outlet 111b fluidly connected to the second inlet 111a through the heat exchanger 110. Thus, a fluid enters through the second inlet 111a exits through the second outlet 111b through the heat exchanger 110. When the two fluids intersect without mixing in the heat exchanger 110, the hotter one cools while the cooler one heats up.

The heat exchanger 110 may be utilized to cool oil or to cool or heat any other fluid. The heat exchanger can also be used to regulate the air flow rate.

In the present embodiment, to ease the circulation of the air flow in the heat exchanger 110, the inlet opening 112 is arranged upstream with respect to the outlet opening 116 with regard of a flow direction of the secondary flow 107a. The first inlet 110a is then located closer to the fan than the first outlet 110b and is configured to remove a portion of the secondary flow 107a.

In the present embodiment, the propulsion system 100 comprises thrust reverser block doors 113 and each one is movable between an open position (in continuous lines) in which the door 113 is out of the secondary channel 107 and a closed or deployed (in dashed lines) position in which the door 113 is across the secondary channel 107 to divert the airflow of the secondary channel 107 and slow down the aircraft 10. Here, each door 113 is attached to a door link 113a mounted articulated at the inner casing 104. The displacement of the door 113 is managed for example by an actuator not represented.

The inlet opening 112 is arranged upstream with respect to the doors 113 with regard of the flow direction of the secondary flow 107a when the doors 113 are in the closed position. With this arrangement, even if the thrust reverser blocker doors 113 are in the closed position, the air may still flow into the heat exchanger 110.

Here, the heat exchanger 110 is attached to the central fairing 102a via attachment legs 121a-b. Here, there are two front legs 121a and to rear legs 121b. Each leg 121a-b is attached through an articulation either to the central fairing 102a or to the heat exchanger 110. Here, each front leg 121a is fixed in an articulated manner to the central fairing 102a and in a solid manner to the heat exchanger 110. Each rear leg 121b is fixed in a solid manner to the central fairing 102a and in an articulated manner to the heat exchanger 110.

To set the heat exchanger 110 in position, the inner casing 104 is cut to allow the passage of the heat exchanger 110. To reduce the impact on the secondary flow 107a, the heat exchanger 110 comprises an inner fairing 115 extending between the inlet opening 112 and the outlet opening 116 in the extension of the inner casing 104.

In the present embodiment, the heat exchanger 110 comprises a heat exchanger chamber 117, a first channel 117a fluidly connected between the heat exchanger chamber 117 and the inlet opening 112 and a second channel 117b fluidly connected between the heat exchanger chamber 117 and the outlet opening 116.

To reduce or minimize air loss, the connection between the channel 117a-b and the associated opening 112, 116 is realized through a seal 119a-b. It means that seals 119a-b are provided between the first channel 117a and the inlet opening 112, and between the second channel 117b and the outlet opening 116.

In the embodiment represented in Fig. 5, a first set comprising the inner fairing 115 and the elements between the inner fairing 115 and the seals 119a-b, is firstly fixed to the inner casing 104, and a second set comprising the first channel 117a, the second channel 117b and the heat exchanger chamber 117, is firstly fixed to the central fairing 102a. When the core 102 is introduced and fixed to the inner casing 104, the first set and the second set are fixed together. The seals 119a-b also take over/allow to absorb the relative movements between the central fairing 102a and the inner casing 104.

The shape and configuration of the first channel 117a and the inlet opening 112 increase the inclination angle of the heat exchanger 110 which is easier to integrate into the system and minimize internal pressure losses from the inlet opening 112 to heat exchanger chamber 117. This reduction also leads to improved specific fuel consumption. Additionally, this allows for an increase in thrust recovery which also provides improved specific fuel consumption.

To this end, the inlet opening 112 and the first channel 117a have slight curves and in addition, they change size.

## Claims

1. Propulsion system (100) of an aircraft (10), comprising:
- a core (102) comprising a central fairing (102a),
- an inner casing (104) around the central fairing (102a),
- a fan casing (106) around the inner casing (104) where a secondary channel (107) for a secondary flow (107a) is delimited between the fan casing (106) and the inner casing (104), and
- a heat exchanger (110) having a first inlet (110a) and a first outlet (110b) where the first inlet (110a) is an inlet opening (112) arranged on the inner casing (104) and where the first outlet (110b) is an outlet opening (116) arranged on the inner casing (104).

2. Propulsion system (100) according to claim 1, **characterized in that** the inlet opening (112) is arranged upstream with respect to the outlet opening (116) with regard of a flow direction of the secondary flow (107a).

3. Propulsion system (100) according to any one of claims 1 or 2, **characterized in that** it comprises thrust reverser block doors (113) each being movable between an open position in which the door (113) is out of the secondary channel (107) and a closed position in which the door (113) is across the secondary channel (107), and **in that** the inlet opening (112) is arranged upstream with respect to the doors (113) with regard of the flow direction of the secondary flow (107a) when the doors (113) are in the closed position.

4. Propulsion system (100) according to any one of claims 1 to 3, **characterized in that** the heat exchanger (110) comprises an inner fairing (115) extending between the inlet opening (112) and the outlet opening (116) in the extension of the inner casing (104).

5. Propulsion system (100) according to any one of claims 1 to 4, **characterized in that** the heat exchanger (110) is attached to the central fairing (102a).

6. Propulsion system (100) according to any one of claims 1 to 5, **characterized in that** the heat exchanger (110) comprises a heat exchanger chamber (117), a first channel (117a) fluidly connected between the heat exchanger chamber (117) and the inlet opening (112) and a second channel (117b) fluidly connected between the heat exchanger chamber (117) and the outlet opening (116).

7. Propulsion system (100) according to claim 6, **characterized in that** the connection between the channel (117a-b) and the associated opening (112, 116) is realized through a seal (119a-b).

8. Propulsion system (100) according to any one of claims 6 or 7, **characterized in that** the inlet opening (112) and the first channel (117a) have slight curves.

9. Aircraft (10) comprising a propulsion system (100) according to any one of the preceding claims.
